# EUROPEAN PATENT APPLICATION

(11) **EP 4 435 772 A1**
(43) Date of publication of application: **25.09.2024**
(21) Application number: 23880894.3
(22) Date of filing: 21.11.2023
(51) Int. Cl.: G09G 5/02

(54) **COLOR SWITCHING METHOD AND APPARATUS, MEDIUM, AND ELECTRONIC DEVICE**

(30) Priority: 10.02.2023 CN 202310125155
(71) Applicant: Honor Device Co., Ltd., Shenzhen, Guangdong 518040 (CN)
(72) Inventor: WANG, Yufei, Shenzhen, Guangdong 518040 (CN); YANG, Qingliang, Shenzhen, Guangdong 518040 (CN)
(74) Representative: Isarpatent
(86) International application number: PCT/CN2023/132969
(87) International publication number: WO 2024/164627

(57) **Abstract**

This application relates to the field of image processing technologies, and discloses a color switching method and apparatus, a medium, and an electronic device, to implement gradual color switching in a display scene switching process, and reduce memory occupation in a color switching process. The method includes: detecting that the electronic device is switched from a first display scene to a second display scene; obtaining first to Nth arrays corresponding to the second display scene, where each array includes at least one color parameter, and any one of the at least one color parameter increases or decreases one by one in the first to Nth arrays; and performing, based on the obtained first to Nth arrays, color adjustment on N interface images to be displayed in the second display scene, where a color of an ith frame of interface image is adjusted based on a color parameter of an ith array, 1≤i≤N, and i is a positive integer.

## Description

This application claims priority to Chinese Patent Application No. 202310125155.7, filed with the China National Intellectual Property Administration on February 10, 2023 and entitled "COLOR SWITCHING METHOD AND APPARATUS, MEDIUM, AND ELECTRONIC DEVICE", which is incorporated herein by reference in its entirety.

### TECHNICAL FIELD

This application relates to the field of image processing technologies, and in particular, to a color switching method and apparatus, a medium, and an electronic device.

### BACKGROUND

In different scenes, a color jump occurs in an electronic device such as a mobile phone or a tablet computer in a process of switching a color mode of a screen, for example, a color jump occurs in a process of switching color temperature, saturation, hue, and value. For example, in a process in which saturation of a gallery is switched from high saturation to low saturation, a color jump occurs when no gradual dimming (Dimming) process exists during color mode switching.

A conventional color switching solution implements color enhancement or attenuation based on a three-dimensional (3 Dimensions, 3D) lookup table (Look Up Table, LUT). The LUT may also be referred to as a color lookup table. An application principle thereof is that different colors are presented when a video is output by using the LUT. Essentially, the 3D LUT is a random access memory (Random Access Memory, RAM), and is used to convert a color mode. Specifically, the 3D LUT includes three one-dimensional LUTs corresponding to an RGB format. During color switching, in this solution, color values of RGB channels that need to be switched to are mapped based on three lookup tables of the 3D LUT to obtain a converted color, and a color mode is switched to the converted color.

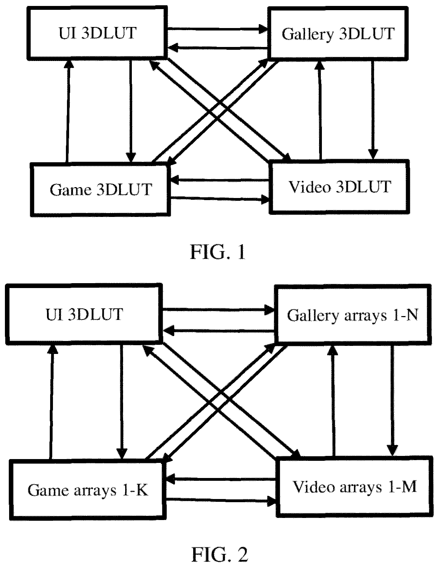

FIG. 1 is a schematic diagram of switching in a conventional 3D LUT replacement solution. Currently, the display 3D LUT is divided into user interface (User Interface, UI), gallery, game, and video scenes. Different scenes have different 3D LUT (17×17×17) parameters (namely, color parameters). During scene switching, a new 3D LUT parameter overwrites an old parameter, where 17×17×17 indicates that when a 17-endpoint lookup table is used as an example, the lookup table includes 17*17*17=4913 points.

To implement switching between any two of the foregoing four scenes, the electronic device needs to store parameters corresponding to the four scenes. A group of 3D LUT (17×17×17) parameters occupies approximately 2-4 M (megabytes) of a resident memory. In this case, memory occupied by the four scenes is (2-4)×4=8-16 M. As a result, memory occupation in a conventional color switching solution is large. In addition, in the foregoing switching process, different 3D LUT parameters are directly replaced, and a color transition effect is poor.

### SUMMARY

Embodiments of this application provide a color switching method and apparatus, a medium, and an electronic device, to implement gradual color switching in a display scene switching process, and reduce memory occupation in a color switching process.

An embodiment of this application provides a color switching method, applied to an electronic device, and including: detecting that the electronic device is switched from a first display scene to a second display scene; obtaining first to Nth arrays corresponding to the second display scene, where each array includes at least one color parameter, and any one of the at least one color parameter increases or decreases one by one in the first to Nth arrays; and performing, based on the obtained first to Nth arrays, color adjustment on N interface images to be displayed in the second display scene, where a color of an ith frame of interface image is adjusted based on a color parameter of an ith array, 1≤i≤N, and i is a positive integer. For example, the first display scene is a UI display scene, and the second display scene is a gallery display scene, but the first display scene and the second display scene are not limited thereto.

For example, if saturation decreases by one intensity one by one in the first to Nth arrays, saturation of the corresponding first to Nth frames of interface images decreases frame by frame, thereby completing gradual saturation switching. Similarly, other color parameters such as hue and value may also increase or decrease one by one in the corresponding first to Nth arrays, so that the hue and the value gradually change frame by frame in the foregoing first to Nth frames of interface images. In this way, colors of a plurality of frames of interface images may be adjusted frame by frame based on a change rule of a value of each color parameter in a plurality of arrays, to ensure that a transition color does not jump, thereby improving a display effect. In addition, in this application, color switching is implemented by using a color parameter in an array form, and a 3D LUT parameter does not need to be switched. Therefore, a memory does not need to store a plurality of groups of 3D LUT parameters, but stores some arrays to complete color switching, and a data volume of the array is far less than a data volume of the 3D LUT parameter, thereby reducing memory occupation in a color switching process.

In a possible implementation of the first aspect, the method further includes: when the electronic device is in the first display scene, displaying interface images in the first display scene based on a three-dimensional lookup table 3D LUT parameter corresponding to the first display scene; and the performing, based on the obtained first to Nth arrays, color adjustment on N interface images to be displayed in the second display scene includes: performing, based on the 3D LUT parameter and the obtained first to Nth arrays, color adjustment on the N interface images to be displayed in the second display scene, where the color of the ith frame of interface image is adjusted based on the 3D LUT parameter and the color parameter of the ith array. In addition, it may be understood that, in a conventional 3D LUT replacement solution, 3D LUT parameters respectively corresponding to a plurality of display scenes (the four display scenes shown in FIG. 1) need to be stored, and large memory space is occupied. In this application, a 3D LUT parameter of one display scene and arrays respectively corresponding to a plurality of other display scenes may be stored. A data volume of the array is far less than that of the 3D LUT parameter. In this case, compared with the conventional solution, in the color switching solution provided in this application, occupation of memory space is reduced.

It may be understood that a color parameter corresponding to the first display scene may be stored as a color parameter in a 3D LUT form, that is, the interface images in the first display scene may be displayed based on a corresponding 3D LUT parameter, and the 3D LUT parameter has high precision, so that a display effect is good. In this case, when the electronic device is switched from the first display scene to the second display scene, the first to Nth arrays corresponding to the second display scene may be superimposed on a current 3D LUT parameter to adjust colors of interface images frame by frame, so that color precision is ensured while gradual color switching is implemented.

In a possible implementation of the first aspect, the method further includes: displaying an interface image after an Nth frame of interface image in the second display scene based on a color parameter of the obtained Nth array and the 3D LUT parameter. In this case, after gradual color switching is completed for first to Nth frames of interface images in the second display scene, the interface image after the Nth frame continues to be displayed based on a color mode obtained after switching, so that a display effect of a subsequent interface image in the second display scene is good.

In a possible implementation of the first aspect, the method further includes: detecting that the electronic device is switched from the second display scene back to the first display scene; and performing, based on the 3D LUT parameter and the obtained first to Nth arrays in reverse order, color adjustment on N interface images to be displayed in the first display scene, where a color of an (N-j+1)th frame of interface image is adjusted based on the 3D LUT parameter and a color parameter of a jth array, 1≤j≤N, and j is a positive integer. In this case, after gradual color switching is completed for first to Nth frames of interface images in the first display scene, an interface image after an Nth frame continues to be displayed based on a color mode obtained after switching, that is, a subsequent interface image continues to be displayed again based on the 3D LUT parameter corresponding to the first display scene, so that a display effect is good.

In a possible implementation of the first aspect, the method further includes: detecting that the electronic device is switched from the second display scene to a third display scene; obtaining first to Mth arrays corresponding to the third display scene, where each array includes at least one color parameter, and any one of the at least one color parameter increases or decreases one by one in the first to Mth arrays; and performing, based on the obtained first to Mth arrays, color adjustment on M interface images to be displayed in the third display scene, where a color of an mth frame of interface image is adjusted based on a color parameter of an mth array, 1≤m≤M, and m is a positive integer. For example, the second display scene may be a gallery display scene, and the third display scene may be a video display scene. It may be understood that the electronic device may adjust first to Mth frames of interface images in the third display scene based the 3D LUT parameter corresponding to the first display scene and the first to Mth arrays. In this case, after gradual color switching is completed for the first to Mth frames of interface images in the third display scene, an interface image after an Mth frame continues to be displayed based on a color mode obtained after switching, that is, the interface image after the Mth frame is displayed based on the Mth array and the 3D LUT parameter corresponding to the first display scene, so that a display effect of a subsequent interface image is good.

In a possible implementation of the first aspect, the color parameter of each array includes hue, saturation, and value, and at least one of the hue, the saturation, and the value changes frame by frame in a plurality of arrays corresponding to one display scene. Therefore, at least one of a plurality of color parameters is adjusted in an array form, to improve flexibility of color switching.

In a possible implementation of the first aspect, any one of the hue, the saturation, and the value increases or decreases one by one based on a linear or nonlinear relationship in a plurality of arrays corresponding to one display scene, and different items in the hue, the saturation, and the value have a same change or different changes in a plurality of arrays corresponding to one display scene. Therefore, different colors in a plurality of color parameters are adjusted in an array form based on different change rules, to improve flexibility of color switching.

According to a second aspect, an embodiment of this application provides a color switching apparatus, applied to an electronic device, and including: a detection module, configured to detect that the electronic device is switched from a first display scene to a second display scene; an obtaining module, configured to obtain first to Nth arrays corresponding to the second display scene, where each array includes at least one color parameter, and any one of the at least one color parameter increases or decreases one by one in the first to Nth arrays; and an adjustment module, configured to perform, based on the obtained first to Nth arrays, color adjustment on N interface images to be displayed in the second display scene, where a color of an ith frame of interface image is adjusted based on a color parameter of an ith array, 1≤i≤N, and i is a positive integer.

In a possible implementation of the second aspect, the apparatus further includes: a display module, configured to: when the electronic device is in the first display scene, display interface images in the first display scene based on a three-dimensional lookup table 3D LUT corresponding to the first display scene, where the adjustment module is specifically configured to perform, based on the 3D LUT parameter and the obtained first to Nth arrays, color adjustment on the N interface images to be displayed in the second display scene, where the color of the ith frame of interface image is adjusted based on the 3D LUT parameter and the color parameter of the ith array.

In a possible implementation of the second aspect, the display module is further configured to display an interface image after an Nth frame of interface image in the second display scene based on a color parameter of the obtained Nth array and the 3D LUT parameter.

In a possible implementation of the second aspect, the detection module is further configured to detect that the electronic device is switched from the second display scene back to the first display scene; and the adjustment module is further configured to perform, based on the 3D LUT parameter and the obtained first to Nth arrays in reverse order, color adjustment on N interface images to be displayed in the first display scene, where a color of an (N-j+1)th frame of interface image is adjusted based on the 3D LUT parameter and a color parameter of a jth array, 1≤j≤N, and j is a positive integer.

In a possible implementation of the second aspect, the detection module is further configured to detect that the electronic device is switched from the second display scene to a third display scene; the obtaining module is further configured to obtain first to Mth arrays corresponding to the third display scene, where each array includes at least one color parameter, and any one of the at least one color parameter increases or decreases one by one in the first to Mth arrays; and the adjustment module is further configured to perform, based on the obtained first to Mth arrays, color adjustment on M interface images to be displayed in the third display scene, where a color of an mth frame of interface image is adjusted based on a color parameter of an mth array, 1≤m≤M, and m is a positive integer.

In a possible implementation of the second aspect, the color parameter of each array includes hue, saturation, and value, and at least one of the hue, the saturation, and the value changes frame by frame in a plurality of arrays corresponding to one display scene.

In a possible implementation of the second aspect, any one of the hue, the saturation, and the value increases or decreases one by one based on a linear or nonlinear relationship in a plurality of arrays corresponding to one display scene, and different items in the hue, the saturation, and the value have a same change or different changes in a plurality of arrays corresponding to one display scene.

According to a third aspect, an embodiment of this application provides a readable medium, where the readable medium stores instructions, and when the instructions are executed on an electronic device, the electronic device is enabled to perform the color switching method according to any one of the first aspect or the possible implementations of the first aspect.

According to a fourth aspect, an embodiment of this application provides an electronic device, including: a storage, configured to store instructions to be executed by one or more processors of the electronic device, and a processor, being one of the processors of the electronic device and configured to perform the color switching method according to any one of the first aspect or the possible implementations of the first aspect.

### BRIEF DESCRIPTION OF DRAWINGS

FIG. 1 is a schematic diagram of a color switching solution based on a conventional 3D LUT replacement solution;
FIG. 2 is a schematic diagram of a color switching scenario according to an embodiment of this application;
FIG. 3 is a schematic diagram of a structure of a mobile phone according to an embodiment of this application;
FIG. 4 is a block diagram of a software structure of a mobile phone according to an embodiment of this application;
FIG. 5 is a schematic diagram of a color switching scenario according to an embodiment of this application;
FIG. 6 is a schematic flowchart of a color switching method according to an embodiment of this application;
FIG. 7 is a schematic flowchart of a color switching method according to an embodiment of this application; and
FIG. 8 is a schematic flowchart of a color switching method according to an embodiment of this application.

### DESCRIPTION OF EMBODIMENTS

Illustrative embodiments of this application include but are not limited to a color switching method, a medium, and an electronic device.

The color switching method provided in this application may be applied to a color switching process when a display scene is switched. In some embodiments, the display scene includes but is not limited to a user interface (User Interface, UI), a gallery, a game, and a video (video). In some other embodiments, the display scene may further include a browser display scene and the like. In addition, the plurality of display scenes may be subdivided into more display sub-scenes. For example, the gallery display scene may be further subdivided into a memory color protection scene (for example, a portrait-related skin color protection scene).

More specifically, in some embodiments, the color switching method provided in the embodiments of this application is mainly applied to a color mode dimming (dimming) switching process of a screen, for example, a process of switching a color parameter such as color temperature, hue, saturation, and value. In this way, an interface image displayed on the screen of the electronic device conforms to a use habit of a user. For example, in the UI display scene, the user prefers to view a picture with high saturation, to conveniently distinguish between and search for icons of various applications. In the gallery display scene such as a portrait picture display scene, the user prefers to view a picture with low saturation and a portrait having a normal color. In this case, when the electronic device is switched from the UI display scene to the gallery display scene, the electronic device may adjust a color mode by reducing saturation.

To resolve a problem in the Background, the embodiments of this application provide a color switching method. In the method, when it is detected that a display scene needs to be switched, for example, when it is identified that the electronic device is switched from the UI display scene to the gallery display scene, N arrays that are related to a plurality of color parameters and that correspond to the gallery display scene may be obtained, and a change of one color parameter in the first to Nth arrays is increasing or decreasing one by one. Further, a color of an ith frame of interface image is adjusted based on each color parameter in an ith array, to perform gradual color adjustment on N corresponding frames of interface images based on the N arrays, where 1≤i≤N, and i is a positive integer. For example, if saturation decreases by one intensity one by one in the first to Nth arrays, saturation of the corresponding first to Nth frames of interface images decreases frame by frame, thereby completing gradual saturation switching. Similarly, other color parameters such as hue and value may also increase or decrease one by one in the corresponding first to Nth arrays, so that the hue and the value gradually change frame by frame in the foregoing first to Nth frames of interface images. In this way, colors of a plurality of frames of interface images may be adjusted frame by frame based on a change rule of a value of each color parameter in a plurality of arrays, to ensure that a transition color does not jump, thereby improving a display effect. In addition, in this application, color switching is implemented by using a color parameter in an array form, and a 3D LUT parameter does not need to be switched. Therefore, a memory does not need to store a plurality of groups of 3D LUT parameters, but stores some arrays to complete color switching, and a data volume of the array is far less than a data volume of the 3D LUT parameter, thereby reducing memory occupation in a color switching process.

In some embodiments, a color parameter corresponding to the UI display scene may be stored as a color parameter in a 3D LUT form, and the 3D LUT parameter has high precision, so that a display effect is good. In this case, when the electronic device is switched from the UI display scene to the gallery display scene, the plurality of arrays corresponding to the gallery display scene may be superimposed on a current 3D LUT parameter to adjust colors of interface images frame by frame, so that color precision is ensured while gradual color switching is implemented.

In some embodiments, the color parameter corresponding to the UI display scene may alternatively be stored in a form of a plurality of arrays, thereby further reducing memory occupation.

In some embodiments, the electronic device applicable to the color switching method in this application includes but is not limited to a mobile phone, a computer, a vehicle, a television, smart glasses, or the like, and may alternatively be a cloud server used to implement a cloud product such as a cloud application. The electronic device applicable to this application includes a screen with a display function. Specifically, the color switching method provided in the embodiments of this application may be performed by an electronic device, or software or a functional module that is in the electronic device and that is configured to perform the color switching method.

FIG. 2 is a schematic diagram of a color switching scenario according to an embodiment of this application. FIG. 2 shows a solution for switching color parameters of different display scenes by combining a 3D LUT and an array according to an embodiment of this application. Compared with the conventional solution shown in FIG. 1, in the solution shown in FIG. 2, arrays used in processes of switching different display scenes are mainly added. Specifically, the switching solution shown in FIG. 2 is based on a 3D LUT parameter (namely, a UI 3D LUT parameter) in a UI display scene, and when the electronic device is switched to another display scene, switching may be performed by superimposing an array. Each display scene corresponds to a plurality of arrays, a plurality of arrays corresponding to different display scenes are different, and a plurality of arrays of each display scene respectively correspond to color switching of a plurality of frames of interface images. For example, arrays 1-N (namely, gallery arrays 1-N) of a gallery display scene shown in FIG. 2 correspond to color switching of first to Nth frames in the gallery display scene. Arrays 1-M (namely, video arrays 1-M) of a video display scene shown in FIG. 2 correspond to color switching of first to Mth frames in the video display scene. In addition, arrays 1-K (namely, game arrays 1-K) of a game display scene shown in FIG. 2 correspond to color switching of first to Kth frames in the game display scene.

It may be understood that in a conventional 3D LUT replacement solution, in a 3D LUT switching process, the first frame of interface image is directly displayed based on a new 3D LUT parameter obtained after replacement, that is, no gradual color switching is performed. Therefore, in the conventional 3D LUT replacement solution, 3D LUT parameters respectively corresponding to a plurality of display scenes (the four display scenes shown in FIG. 1) need to be stored, and large memory space is occupied. In this application, a 3D LUT parameter of one display scene and arrays respectively corresponding to a plurality of other display scenes may be stored. A data volume of the array is far less than that of the 3D LUT parameter. In this case, compared with the conventional solution, in the color switching solution provided in this application, occupation of memory space is reduced. In addition, in the conventional solution, the 3D LUT parameter is directly replaced to switch a color. In this application, a color is gradually switched based on a plurality of arrays and by using a plurality of frames of interface images, thereby reducing a color jump in a switching process.

Next, an example in which the electronic device applicable to the color switching method in the embodiments of this application is a mobile phone is used to describe a structure of the electronic device.

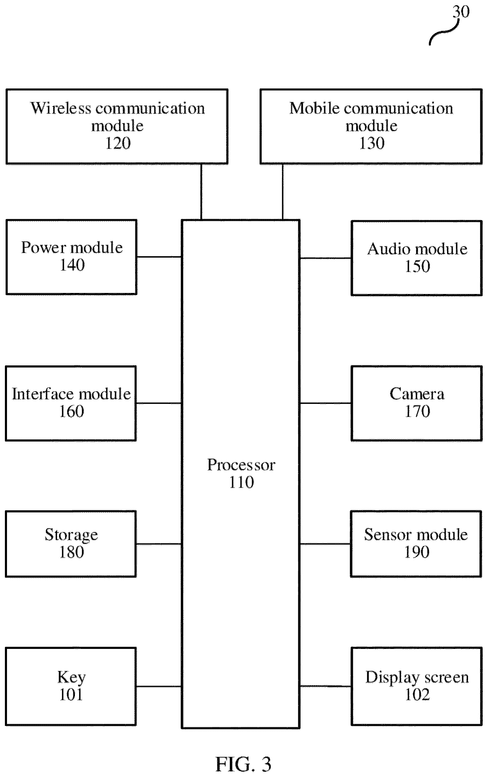

FIG. 3 is a schematic diagram of a structure of a mobile phone according to an embodiment of this application. As shown in FIG. 3, the mobile phone 30 may include a processor 110, a power module 140, a storage 180, a mobile communication module 130, a wireless communication module 120, a sensor module 190, an audio module 150, a camera 170, an interface module 160, a key 101, a display screen 102, and the like.

It may be understood that the structure shown in this embodiment of the present invention does not constitute a specific limitation on the mobile phone 30. In some other embodiments of this application, the mobile phone 30 may include more or fewer components than those shown in the figure, or combine some components, or split some components, or have different component arrangements. The components shown in the figure may be implemented by using hardware, software, or a combination of software and hardware.

The processor 110 may include one or more processing units, for example, a processing module or a processing circuit of a central processing unit (Central Processing Unit, CPU), a graphics processing unit (Graphics Processing Unit, GPU), a digital signal processor (Digital Signal Processing, DSP), a micro control unit MCU (Micro-programmed Control Unit), an artificial intelligence (Artificial Intelligence, AI) processor, or a field programmable gate array (Field Programmable Gate Array, FPGA). Different processing units may be independent components, or may be integrated into one or more processors. A storage unit may be disposed in the processor 110, to store instructions and data. In some embodiments, the storage unit in the processor 110 is a cache 180. For example, the storage 180 may be configured to store 3D LUT parameters corresponding to various display scenes and a plurality of arrays corresponding to various display scenes. Further, the processor 110 may implement gradual color switching in a software implementation by combining the 3D LUT parameter and the plurality of arrays corresponding to various display scenes.

In some embodiments, the processor 110 includes an application processor (Application Processor, AP), configured to process an HSV (Hue, Saturation, Value) parameter, so as to adjust a color mode of the display screen 102. In some embodiments, the processor 110 may further include a hardware 3D LUT processor, configured to: process 3D LUT parameters corresponding to various display scenes, and perform 3D LUT switching in different display scenes. Further, the foregoing application processor cooperates with the 3D LUT processor, so that gradual color switching can be implemented by combining the 3D LUT parameter and the plurality of arrays corresponding to various display scenes.

The power module 140 may include a power supply, a power management component, and the like. The power supply may be a battery. The power management module is configured to: manage charging of the power supply, and supply power from the power supply to another module. In some embodiments, the power management component includes a charging management module and a power management module. The charging management module is configured to receive a charging input from a charger. The power management module is configured to connect the power supply and the charging management module to the processor 110. The power management module receives an input from the power supply and/or an input from the charging management module, to supply power to the processor 110, the display screen 102, the camera 170, the wireless communication module 120, and the like.

The mobile communication module 130 may include but is not limited to an antenna, a power amplifier, a filter, a low noise amplifier (Low noise amplify, LNA), and the like. The mobile communication module 130 may provide a solution for wireless communication including 2G/3G/4G/5G and the like applied to the mobile phone 30. The mobile communication module 130 may receive an electromagnetic wave by using the antenna, perform processing such as filtering or amplification on the received electromagnetic wave, and transmit a processed electromagnetic wave to the modem processor for demodulation. The mobile communication module 130 may further amplify a signal modulated by the modem processor, and convert the signal into an electromagnetic wave by using the antenna for radiation.

The wireless communication module 120 may include an antenna, and send/receive an electromagnetic wave by using the antenna. The wireless communication module 120 may provide a solution for wireless communication including a wireless local area network (wireless local area networks, WLAN) (for example, a wireless fidelity (wireless fidelity, Wi-Fi) network), Bluetooth (bluetooth, BT), near field communication (near field communication, NFC), an infrared (infrared, IR) technology, and the like applied to the mobile phone 30. The mobile phone 30 may communicate with a network and another device by using a wireless communication technology.

In some embodiments, the mobile communication module 130 and the wireless communication module 120 of the mobile phone 30 may be alternatively located in a same module.

The display screen 102 is configured to display a human-computer interaction interface, an image, a video, and the like. For example, the display screen 102 may display a UI interface such as a home interface, and may further display interfaces of various applications, such as an interface of a gallery application and an interface of a video application. In addition, for ease of description, in the interface displayed on the display screen 102, an interface image may be switched on a per-frame basis. More specifically, when the display screen 102 is switched to different display scenes, a color parameter may be switched, that is, colors of interface images in different display scenes are switched.

The sensor module 190 may include an optical proximity sensor, a pressure sensor, a gyroscope sensor, and the like.

The audio module 150 is configured to convert digital audio information into an analog audio signal for output, or is configured to convert an analog audio input into a digital audio signal. In some embodiments, the audio module 150 may include a speaker, an earpiece, a microphone, and a headset jack.

The camera 170 is configured to capture a still image or a video. The mobile phone 30 may implement a photographing function by using an ISP, the camera 170, a video codec, the GPU, the display screen 102, the application processor, and the like.

The interface module 160 includes an external storage interface, a universal serial bus (universal serial bus, USB) interface, a subscriber identity module (subscriber identification module, SIM) card interface, and the like.

In some embodiments, the mobile phone 30 further includes the key 101, a motor, an indicator, and the like. The key 101 may include a volume key, an on/off key, and the like. The motor is configured to enable the mobile phone 30 to produce a vibration effect. The indicator may include a laser indicator, a radio frequency indicator, an LED indicator, and the like.

A software system of the mobile phone 30 may use a layered architecture, an event-driven architecture, a microkernel architecture, a micro service architecture, or a cloud architecture. In this embodiment of the present invention, an Android TM system of a layered architecture is used as an example to describe the software structure of the mobile phone 30.

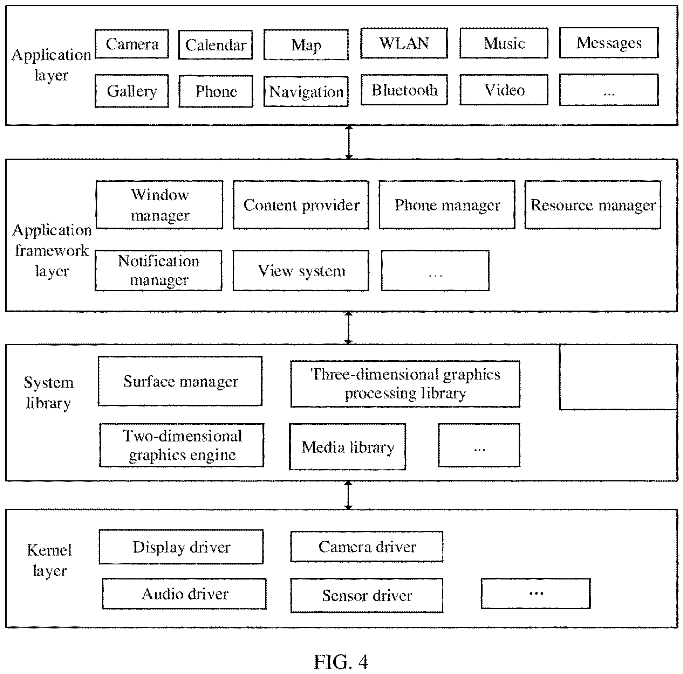

FIG. 4 is a block diagram of a software structure of a mobile phone 30 according to an embodiment of this application.

In the layered architecture, software is divided into several layers, and each layer has a clear role and task. The layers communicate with each other through a software interface. In some embodiments, the Android system is divided into four layers, which are respectively an application layer, an application framework layer, an Android runtime (Android runtime) and system library, and a kernel layer from top to bottom.

The application layer may include a series of application packages.

As shown in FIG. 4, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for the application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of a display screen, determine whether a status bar exists, lock a screen, take a screenshot, and the like.

The content provider is configured to store and obtain data, and enable the data to be accessible to an application. The data may include a video, an image, audio, calls that are made and answered, browsing history and bookmarks, a phone book, and the like.

The view system includes visual controls, for example, a control for displaying text and a control for displaying a picture. The view system may be configured to construct an application. A display interface may include one or more views. For example, a display interface including a Messages notification icon may include a view for displaying text and a view for displaying a picture.

The phone manager is configured to provide a communication function of the mobile phone 30, for example, call status management (including answering, hanging up, and the like).

The resource manager provides various resources for an application, for example, a localized string, an icon, a picture, a layout file, and a video file.

The notification manager enables an application to display notification information in a status bar, and may be configured to convey a notification-type message. The displayed notification information may automatically disappear after a short stay without user interaction. For example, the notification manager is configured to notify download completion, provide a message reminder, and the like. The notification manager may alternatively be a notification that appears in a top status bar of a system in a form of a graph or scroll bar text, for example, a notification of an application running in the background, or a notification that appears on a screen in a form of a dialog window. For example, text information is prompted in the status bar, an alert tone is produced, the electronic device vibrates, or an indicator light blinks.

The Android Runtime includes a kernel library and a virtual machine. The Android runtime is responsible for scheduling and management of the Android system.

The kernel library includes two parts: One part is a functional function that needs to be invoked by a java language, and the other part is a kernel library of Android.

The application layer and the application framework layer are run in the virtual machine. The virtual machine executes java files at the application layer and the application framework layer as binary files. The virtual machine is configured to perform functions such as lifecycle management of an object, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playing and recording in a plurality of common audio and video formats, a static image file, and the like. The media library may support a plurality of audio and video coding formats, for example, MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

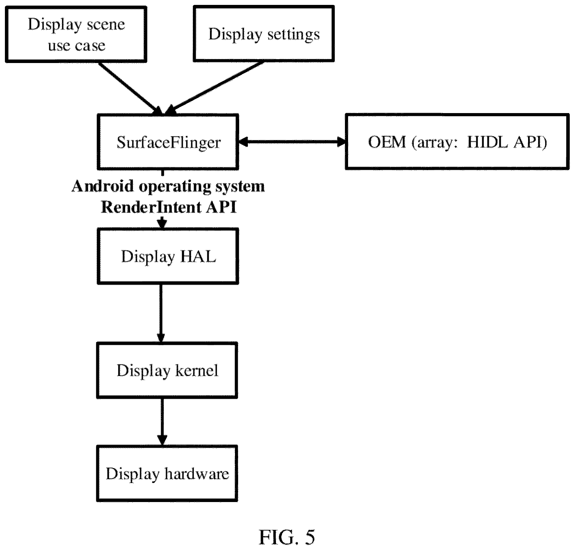

Further, FIG. 5 is a schematic diagram of a color switching scenario according to an embodiment of this application. As shown in FIG. 5, a display scene use case (Use case) is an interface image displayed on the mobile phone 30 in a current display scene, for example, a home interface (namely, a UI interface) image and an interface image of an application such as a gallery, a video, and a game. Display settings (Display settings) are used to provide a 3D LUT parameter corresponding to the current display scene. In this case, a use case of an interface image currently displayed on the mobile phone 30 and a 3D LUT parameter of current display settings may be input into SurfaceFlinger for processing.

OEM (array: HIDL API) is an array provided by an original equipment manufacturer (Original Equipment Manufacturer, OEM) customized program by using a hardware abstraction layer interface definition language (HAL interface definition language, HIDL) application programming interface (Application Programming Interface, API), namely, an array in a plurality of arrays corresponding to a current display scene.

In addition, SurfaceFlinger is a system service used to synthesize graphics data and then send the data to a screen for rendering. For example, SurfaceFlinger may synthesize a use case of an interface image in a current display scene based on a current 3D LUT parameter and a color parameter in a corresponding array, to obtain to-be-displayed data, that is, perform post-processing on a current interface image by using the current 3D LUT parameter and the color parameter in the corresponding array, to obtain the to-be-displayed data, and then send the to-be-displayed data to the screen (for example, the display screen 102) for rendering, to implement color switching. Further, the SurfaceFlinger may deliver, by using an Android-OS (Android operating system) RenderIntent (rendering intent) API, the to-be-displayed data obtained through synthesis. The to-be-displayed data passes through a display hardware abstraction layer (Hardware Abstraction Layer, HAL) and a display kernel (kernel) to reach display hardware (such as the display screen 102) for rendering, to display an interface image with an adjusted color.

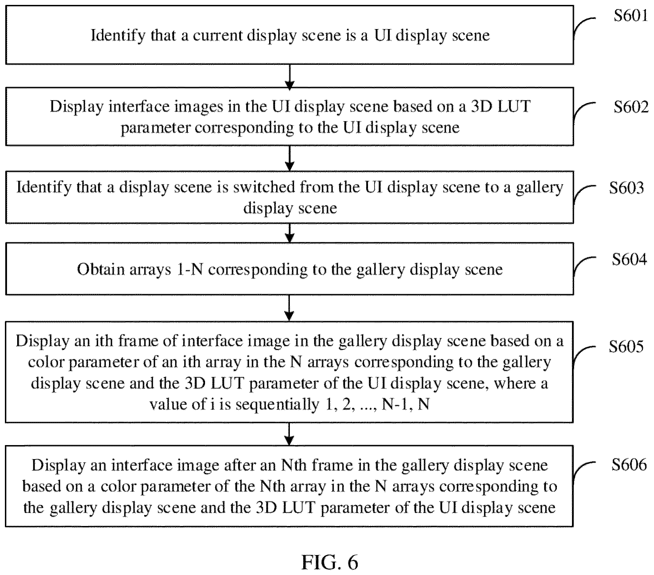

Next, with reference to the foregoing descriptions, a procedure of a color switching method provided in an embodiment of this application is described in detail with reference to FIG. 6. The method may be performed by the mobile phone 30 shown in FIG. 3, and the method may be specifically implemented based on the software system shown in FIG. 4, or performed based on the SurfaceFlinger system service in the scenario shown in FIG. 5.

Specifically, in the color switching procedure shown in FIG. 6, color switching may be implemented by displaying an interface image by using a 3D LUT parameter and superimposing an array. The method procedure includes the following steps:

S601: Identify that a current display scene is a UI display scene.

In some embodiments, each display scene has one attribute, and attributes of different display scenes are different. The mobile phone 30 may distinguish between different display scenes by identifying an attribute of a display scene, for example, identify different display scenes in the UI display scene, the gallery display scene, the video display scene, and the game display scene shown in FIG. 2. For example, attributes of different display scenes may be attributes of shown interface images, attributes of shown applications, or the like. This is not specifically limited in this embodiment of this application.

In some embodiments, a 3D LUT parameter corresponding to the UI display scene may be used as a configuration file and placed in a resident memory for delivery settings. It may be understood that, in the color switching method provided in this application, the resident memory of the mobile phone 30 may store a 3D LUT parameter corresponding to only one display scene. However, the 3D LUT parameter is not limited to the 3D LUT parameter corresponding to the UI display scene, and may be a 3D LUT parameter corresponding to any one of other display scenes such as the gallery display scene, the video display scene, or the game display scene.

S602: Display interface images in the UI display scene based on the 3D LUT parameter corresponding to the UI display scene.

In this case, when identifying the UI display scene, the mobile phone 300 may invoke the 3D LUT parameter corresponding to the UI display scene, deliver the 3D LUT parameter based on the display settings in the scenario shown in FIG. 5, and then perform processing by using SurfaceFlinger, to obtain to-be-displayed data. The to-be-displayed data passes through a display HAL and a display kernel to reach display hardware (such as the display screen 102) to render the interface images in the UI display scene.

S603: Identify that a display scene is switched from the UI display scene to a gallery display scene.

In some embodiments, the mobile phone 30 may identify, by identifying an attribute of a display scene, that the display scene is switched from the UI display scene to the gallery display scene.

S604: Obtain arrays 1-N corresponding to the gallery display scene.

In some embodiments, the mobile phone 30 may store a plurality of arrays corresponding to each display scene, for example, arrays 1-N corresponding to the gallery display scene, arrays 1-M corresponding to the video display scene, and arrays 1-K corresponding to the game display scene.

In the following embodiments, for ease of description, the arrays 1-N corresponding to the gallery display scene are mainly described, and related descriptions of arrays corresponding to another display scene are not described.

In some embodiments, a color parameter in each array provided in this application may include an HSV (Hue, Saturation, Value) parameter, namely, an H parameter, an S parameter, and a V parameter in an HSV color mode. The H parameter, the S parameter, and the V parameter are respectively hue (Hue), saturation (Saturation), and value (Value). Further, in this embodiment of this application, the mobile phone 30 may adjust hue, saturation, value, color temperature, and the like of a color mode of a screen by adjusting the H parameter, the S parameter, and the V parameter.

Generally, each display scene corresponds to one default HSV parameter, that is, each display scene corresponds to a default H parameter, a default S parameter, and a default V parameter. It may be understood that the default HSV parameter corresponding to each display scene is an HSV parameter existing when an interface image has a good display effect in the display scene. In this case, when the mobile phone is switched to a display scene, a current HSV parameter may be switched to a corresponding default HSV parameter. Default HSV parameters corresponding to different display scenes are different.

To gradually switch a color, in this embodiment of this application, corresponding preset HSV ranges may be set for various display scenes based on default HSV parameters corresponding to various display scenes, so that a color parameter in each display scene gradually changes based on a corresponding preset HSV range. A preset HSV range corresponding to each display scene includes a start HSV parameter and an end HSV parameter, so that an actual HSV parameter can gradually change from the start HSV parameter to the end HSV parameter, and the end HSV parameter is a default HSV parameter corresponding to the display scene. More specifically, the default HSV range includes a default H range, a default S range, and a default V range. In this case, an actual H parameter in one display scene may gradually change from a start H parameter to an end H parameter based on a default H range within a corresponding default HSV range. Similarly, gradual change processes of an actual S parameter and an actual V parameter in one display scene are similar to that of the H parameter, and details are not described herein again.

In some embodiments, a plurality of arrays corresponding to each display scene may be obtained through division based on a corresponding preset HSV range. In this case, the first array in a plurality of arrays corresponding to one display scene is a start HSV parameter in a corresponding preset HSV range, and the last array is an end HSV parameter in the corresponding preset HSV range. Therefore, when the mobile phone is switched from another display scene to a current display scene, colors are adjusted frame by frame by using a plurality of frames of interface images and based on a plurality of arrays corresponding to the current display scene, to implement a gradual color switching process.

It may be understood that, when a color is switched in one display scene, at least one of hue, saturation, and value may be switched, and these parameters are not necessarily switched simultaneously. That is, when a color is switched in one display scene, at least one of an H parameter, an S parameter, and a V parameter in each of a plurality of arrays corresponding to the display scene may be adjusted.

In some embodiments, arrays corresponding to one display scene are linear or nonlinear arrays, that is, a relationship that an HSV parameter changes one by one in the plurality of arrays is a linear relationship or a nonlinear relationship. More specifically, in a plurality of arrays corresponding to one display scene, a relationship that an H parameter, an S parameter, or a V parameter changes one by one may be a linear relationship or a nonlinear relationship.

For example, in a plurality of arrays corresponding to one display scene, an H parameter, an S parameter, or a V parameter may linearly change by one value one by one, for example, the parameter decreases by one value in each array from the first array to the last array, so that multilevel gradual adjustment is completed. In this case, based on color parameters of the arrays, an intensity of hue, saturation, or value of a plurality of frames of interface images in the display scene may be reduced frame by frame, to implement a linear gradual color change.

For another example, in a plurality of arrays corresponding to one display scene, an H parameter, an S parameter, or a V parameter may nonlinearly change by different values one by one, for example, the parameter decreases by two values in each array from the first array to the fifth array, and the parameter decreases by one value in each array from the sixth array to the tenth array. In this case, based on color parameters of the arrays, an intensity of hue, saturation, or value of first to fifth frames of interface images in the display scene may be greatly reduced, and an intensity of hue, saturation, or value of sixth to tenth frames of interface images may be slightly reduced, to implement a nonlinear gradual color change.

Further, in some embodiments, in a plurality of arrays corresponding to one display scene, a value of one of an H parameter, an S parameter, and a V parameter changes, and values of other parameters remain unchanged. In some other embodiments, in a plurality of arrays corresponding to one display scene, a plurality of items in an H parameter, an S parameter, and a V parameter change synchronously, but relationships and amplitudes of array-by-array changes of different parameters may be different. For example, the values of the H parameter and the S parameter increase or decrease array by array, but change amplitudes and change relationships (namely, a linear change relationship or a nonlinear change relationship) of the values of the H parameter and the S parameter may be different.

For example, the arrays 1-N corresponding to the gallery display scene shown in FIG. 2 are used as an example. It is assumed that a value of an H parameter in an HSV parameter changes, and values of an S parameter and a V parameter remain unchanged. For example, hue represented by the H parameter in the arrays 1-N decreases from an intensity 100 to an intensity 0, and one intensity value may be linearly reduced for each array starting from the first array, that is, hue of first to Nth frames in the gallery display scene is reduced by one level of intensity frame by frame. In this case, N=100, and a default H range corresponding to the arrays 1-N is [100, 0], that is, a default S parameter corresponding to the gallery display scene is 0. For example, a function definition of an array provided in this application may be defined in a manner of a structure. In this case, if the values of the S parameter and the V parameter in the arrays 1-N corresponding to the gallery display scene are maintained as default values (for example, 0), the first array in the foregoing arrays 1-N is (H=100, S=0, V=0), the second array is (H=99, S=0, V=0), the third array is (H=98, S=0, V=0), ..., the 99th array is (H=1, S=0, V=0), and the 100th array is (H=0, S=0, V=0).

For another example, the arrays 1-N corresponding to the gallery display scene shown in FIG. 2 are used as an example. It is assumed that a value of an S parameter in an HSV parameter changes, and values of an H parameter and a V parameter remain unchanged. For example, saturation represented by the S parameter in the arrays 1-N decreases from an intensity 50 to an intensity 0, and one intensity value may be linearly reduced for each array starting from the first array, that is, saturation of first to Nth frames in the gallery display scene is reduced by one level of intensity frame by frame. In this case, N=50, and a default S range corresponding to the arrays 1-N is [50, 0], that is, a default S parameter corresponding to the gallery display scene is 0. In this case, if the values of the H parameter and the V parameter in the arrays 1-N corresponding to the gallery display scene are maintained as default values (for example, 0), the first array in the foregoing arrays 1-N is (H=0, S=50, V=0), the second array is (H=0, S=49, V=0), the third array is (H=0, S=48, V=0), ..., the 49th array is (H=0, S=1, V=0), and the 50th array is (H=0, S=0, V=0).

For another example, the arrays 1-N corresponding to the gallery display scene shown in FIG. 2 are used as an example. It is assumed that a value of a V parameter in an HSV parameter changes, and values of an H parameter and an S parameter remain unchanged. For example, value represented by the V parameter in the arrays 1-N decreases from an intensity 10 to an intensity 0, and one intensity value may be linearly reduced for each array starting from the first array, that is, value of first to Nth frames in the gallery display scene is reduced by one level of intensity frame by frame. In this case, N=10, and a default V range corresponding to the arrays 1-N is [10, 0], that is, a default V parameter corresponding to the gallery display scene is 0. In this case, if the values of the H parameter and the S parameter in the arrays 1-N corresponding to the gallery display scene are maintained as default values (for example, 0), the first array in the foregoing arrays 1-N is (H=0, S=0, V=10), the second array is (H=0, S=0, V=9), the third array is (H=0, S=0, V=8), ..., the ninth array is (H=0, S=0, V=1), and the tenth array is (H=0, S=0, V=0).

For another example, the arrays 1-N corresponding to the gallery display scene shown in FIG. 2 are used as an example. It is assumed that values of an H parameter and an S parameter in an HSV parameter change, and a value of a V parameter remains unchanged. For example, hue represented by the H parameter in the arrays 1-N decreases from an intensity 100 to an intensity 0, and saturation represented by the S parameter decreases from an intensity 50 to an intensity 0. In this way, one hue intensity and a half saturation intensity may be linearly reduced for each array starting from the first array, that is, hue of first to Nth frames in the gallery display scene is reduced by one level of intensity frame by frame, and saturation thereof is reduced by a half intensity frame by frame. In this case, N=100, a default H range corresponding to the arrays 1-N is [100, 0], and a default S range corresponding to the arrays 1-N is [50, 0]. In this case, if the value of the V parameter in the arrays 1-N corresponding to the gallery display scene is maintained as a default value (for example, 0), the first array in the foregoing arrays 1-N is (H=100, S=50, V=0), the second array is (H=99, S=49.5, V=0), the third array is (H=98, S=49, V=0), ..., the 99th array is (H=1, S=0.5, V=0), and the 100th array is (H=0, S=0, V=0).

Next, S605 of the method procedure shown in FIG. 6 continues to be described.

S605: Display an ith frame of interface image in the gallery display scene based on a color parameter of an ith array in the N arrays corresponding to the gallery display scene and the 3D LUT parameter of the UI display scene, where a value of i is sequentially 1, 2, ..., N-1, N.

It may be understood that the mobile phone 10 may perform post-processing on the ith frame of interface image in the display gallery display scene based on the color parameter of the ith array and the 3D LUT parameter of the UI display scene, to implement screen rendering.

Referring to the foregoing example, it is assumed that the first array in the arrays 1-N corresponding to the gallery display scene is (H=100, S=50, V=0), the second array is (H=99, S=49.5, V=0), the third array is (H=98, S=49, V=0), ..., the 99th array is (H=1, S=0.5, V=0), and the 100th array is (H=0, S=0, V=0). In this case, for the first frame of the interface image in the gallery display scene, the first array (H=100, S=50, V=0) may be superimposed on a corresponding 3D LUT parameter to perform color adjustment. In this way, the mobile phone 30 may sequentially superimpose, on the 3D LUT parameter of the UI display scene based on these arrays, hue, saturation, and value that are represented by the ith array, thereby implementing gradual color switching.

S606: Display an interface image after an Nth frame in the gallery display scene based on a color parameter of the Nth array in the N arrays corresponding to the gallery display scene and the 3D LUT parameter of the UI display scene.

In this case, after gradual color switching is completed for the first to Nth frames of interface images in the gallery display scene, the interface image after the Nth frame continues to be displayed based on a color mode obtained after switching, so that a display effect of a subsequent interface image in the gallery display scene is good.

It may be understood that, in some other embodiments, the mobile phone 30 may display a 3D LUT parameter of any one of the gallery display scene, the video display scene, and the game display scene, display an interface image by using the 3D LUT parameter, and superimpose a plurality of arrays corresponding to another display scene based on this, to implement gradual color switching. Correspondingly, a plurality of arrays that correspond to various display scenes and that are stored in the mobile phone 30 also change accordingly.

In addition, in this embodiment of this application, a color parameter included in an array has low precision. If color switching in different display scenes is implemented only by switching a plurality of arrays corresponding to various display scenes, precision of color switching is low. However, a color parameter included in the 3D LUT parameter has high precision. Therefore, in this application, the 3D LUT parameter is combined with arrays corresponding to various display scenes, to implement color switching in different display scenes, so that high color precision can be ensured while gradual color switching is implemented.

In this way, in the color switching method provided in this embodiment of this application, the 3D LUT is combined with the array, and the 3D LUT does not need to be directly switched. Instead, color adjustment is sequentially and gradually performed based on a current 3D LUT parameter and arrays corresponding to a current display scene, to implement gradual color switching. This can not only ensure that a transition color does not jump, but also reduce memory occupation during color mode switching.

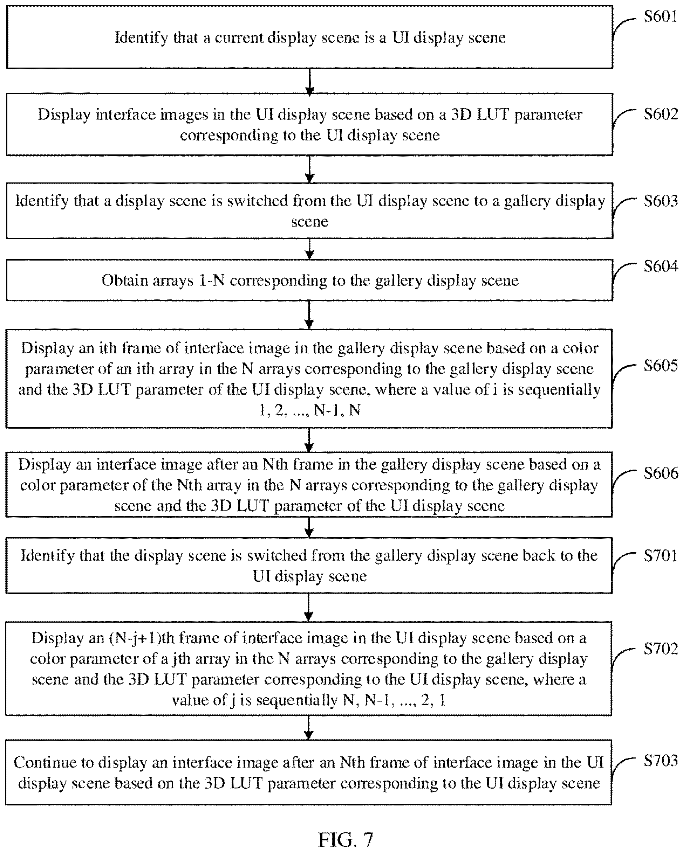

FIG. 7 is a schematic flowchart of a color switching method according to an embodiment of this application. Compared with FIG. 6, in the procedure shown in FIG. 7, the following color switching procedure is added: Interface images are displayed by superimposing the plurality of arrays on the 3D LUT parameter in reverse order, to switch back to a display scene.

Specifically, based on the method shown in FIG. 6, the method shown in FIG. 7 may further include S701 to S703 after S606.

S701: Identify that the display scene is switched from the gallery display scene back to the UI display scene.

For descriptions of S701, refer to the foregoing related descriptions of S601. Details are not described herein again.

S702: Display an (N-j+1)th frame of interface image in the UI display scene based on a color parameter of a jth array in the N arrays corresponding to the gallery display scene and the 3D LUT parameter corresponding to the UI display scene, where a value of j is sequentially N, N-1, ..., 2, 1.

Referring to the foregoing example, it is assumed that the first array in the arrays 1-N corresponding to the gallery display scene is (H=100, S=50, V=0), the second array is (H=99, S=49.5, V=0), the third array is (H=98, S=49, V=0), ..., the 99th array is (H=1, S=0.5, V=0), and the 100th array is (H=0, S=0, V=0). In this case, in the UI display scene, the first frame of interface image may be rendered and displayed by superimposing the 100th array (H=0, S=0, V=0) on a corresponding 3D LUT parameter, the second frame of interface image may be rendered and displayed by superimposing the 99th array (H=1, S=0.5, V=0) on the corresponding 3D LUT parameter, ..., and the 99th frame of interface image may be rendered and displayed by superimposing the second array (H=99, S=49.5, V=0) on the corresponding 3D LUT parameter. In this way, the mobile phone 30 may sequentially superimpose, in reverse order on the 3D LUT parameter of the UI display scene based on these arrays, hue, saturation, and value that are represented by each array, thereby implementing gradual color switching.

S703: Continue to display an interface image after an Nth frame of interface image in the UI display scene based on the 3D LUT parameter corresponding to the UI display scene.

In this case, after gradual color switching is completed for first to Nth frames of interface images in the UI display scene, the interface image after the Nth frame continues to be displayed based on a color mode obtained after switching, that is, a subsequent interface image continues to be displayed again based on the 3D LUT parameter corresponding to the UI display scene, so that a display effect is good.

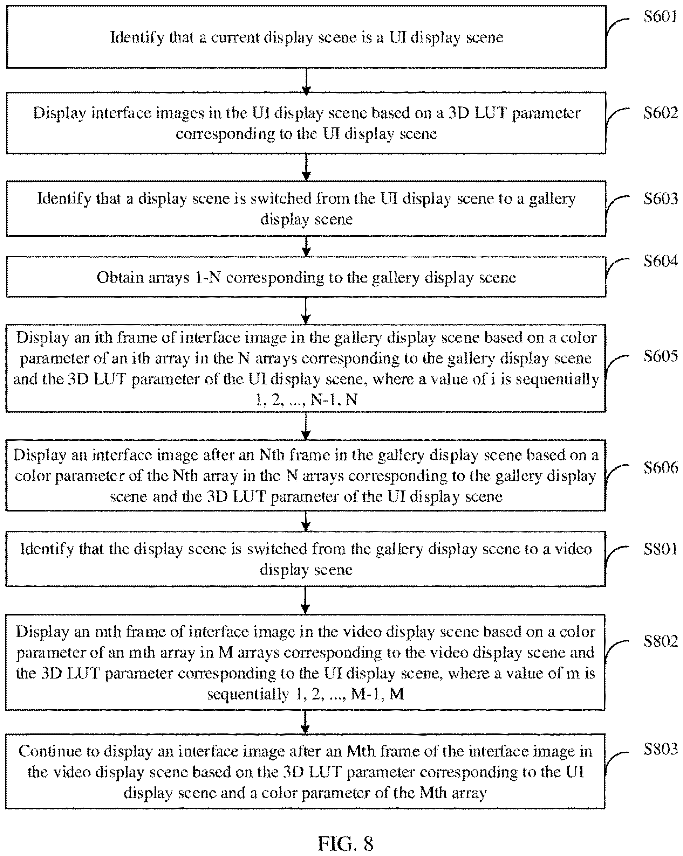

FIG. 8 is a schematic flowchart of a color switching method according to an embodiment of this application. Compared with FIG. 6, in the procedure shown in FIG. 7, a procedure of implementing color switching by switching the plurality of arrays superimposed on the 3D LUT parameter is added.

Specifically, based on the method shown in FIG. 6, the method shown in FIG. 8 may further include S801 to S803 after S606.

S801: Identify that the display scene is switched from the gallery display scene to a video display scene.

For descriptions of S801, refer to the foregoing related descriptions of S 601. Details are not described herein again.

S802: Display an mth frame of interface image in the video display scene based on a color parameter of an mth array in M arrays corresponding to the video display scene and the 3D LUT parameter corresponding to the UI display scene, where a value of m is sequentially 1, 2, ..., M-1, M.

For descriptions of the M arrays, refer to the foregoing related descriptions of the N arrays corresponding to the gallery display scene. Details are not described herein again.

Further, for a specific procedure of adjusting the mth frame of interface image based on the color parameter of the mth array, refer to the foregoing related descriptions of S606. In this way, the mobile phone 30 may sequentially superimpose, on the 3D LUT parameter of the UI display scene based on the M arrays, hue, saturation, and value that are represented by each array, thereby implementing gradual color switching in the process of switching from the gallery display scene to the video display scene.

S803: Continue to display an interface image after an Mth frame of the interface image in the video display scene based on the 3D LUT parameter corresponding to the UI display scene and a color parameter of the Mth array.

In this case, after gradual color switching is completed for first to Mth frames of interface images in the video display scene, the interface image after the Mth frame continues to be displayed based on a color mode obtained after switching, so that a display effect of a subsequent interface image is good.

Embodiments of mechanisms disclosed in this application may be implemented by using hardware, software, firmware, or a combination of these implementation methods. The embodiments of this application may be implemented as a computer program or program code executed on a programmable system. The programmable system includes at least one processor, a storage system (including a volatile memory and a non-volatile memory and/or a storage element), at least one input device, and at least one output device.

The program code may be applied to an input instruction to perform various functions described in this application and generate output information. The output information may be applied to one or more output devices in a known manner. For the purpose of this application, the processing system includes any system having a processor such as a digital signal processor (DSP), a microcontroller, an application-specific integrated circuit (ASIC), or a microprocessor.

The program code may be implemented by using an advanced programming language or an object-oriented programming language, to communicate with the processing system. When required, the program code may also be implemented by using an assembly language or a machine language. In fact, the mechanisms described in this application are not limited to a scope of any specific programming language. In any scenario, the language may be a compilation language or an interpretation language.

In some cases, the disclosed embodiments may be implemented by using hardware, firmware, software, or any combination thereof. The disclosed embodiments may be further implemented as instructions carried or stored on one or more transitory or non-transitory machine-readable (for example, computer-readable) storage media, and the instructions may be read and executed by one or more processors. For example, the instructions may be distributed by using a network or another computer-readable medium. Therefore, the machine-readable medium may include any mechanism used to store or transmit information in a machine (for example, computer) readable form, including but not limited to a floppy disk, a compact disc, an optical disc, a read-only memory (CD-ROMs), a magneto-optical disk, a read-only memory (ROM), a random access memory (RAM), an erasable programmable read-only memory (EPROM), an electrically erasable programmable read-only memory (EEPROM), a magnetic card or an optical card, a flash memory, or a tangible machine-readable storage configured to transmit information (such as a carrier, an infrared signal, and a digital signal) via the Internet in an electrical, optical, or acoustic form or another form of propagation signal. Therefore, the machine-readable medium includes any type of machine-readable medium suitable for storing or transmitting electronic instructions or information in the machine (for example, computer) readable form.

In the accompanying drawings, some structure or method features may be shown in a particular arrangement and/or order. However, it should be understood that such specific arrangement and/or sorting may not be required. Instead, in some embodiments, these features may be arranged in a manner and/or order different from that shown in the illustrative accompanying drawings. In addition, inclusion of the structure or method features in a particular figure does not imply that all embodiments need to include the features. In some embodiments, these features may not be included, or these features may be combined with other features.

It should be noted that all the units/modules mentioned in the device embodiments of this application are logical units/modules. Physically, a logical unit/module may be a physical unit/module, or may be a part of a physical unit/module, or may be implemented as a combination of a plurality of physical units/modules. Physical implementations of these logical units/modules are not most important, and only a combination of functions implemented by these logical units/modules is a key to resolving the technical problem proposed in this application. In addition, to highlight the innovative part of this application, in the foregoing device embodiments of this application, units/modules that are not closely related to resolving the technical problem proposed in this application are not introduced. This does not mean that no other units/modules exist in the foregoing device embodiments.

It should be noted that in the examples and specification of this patent, relational terms such as first and second are only used to distinguish one entity or operation from another entity or operation, and do not necessarily require or imply that there is any such actual relationship or order between these entities or operations. In addition, the term "include", "comprise", or any other variant thereof is intended to cover non-exclusive inclusion, so that a process, method, article, or device that includes a series of elements includes not only those elements but also other elements that are not expressly listed, or includes elements inherent to such a process, method, article, or device. Without further limitation, the element defined by the sentence "including a" does not exclude that other identical elements also exist in the process, method, article, or device including the element.

Although this application has been illustrated or described with reference to some preferred embodiments of this application, a person of ordinary skill in the art should understand that various modifications may be made to forms and details without departing from the spirit and scope of this application.

## Claims

1. A color switching method, applied to an electronic device, and comprising:
detecting that the electronic device is switched from a first display scene to a second display scene;
obtaining first to Nth arrays corresponding to the second display scene, wherein each array comprises at least one color parameter, and any one of the at least one color parameter increases or decreases one by one in the first to Nth arrays; and
performing, based on the obtained first to Nth arrays, color adjustment on N interface images to be displayed in the second display scene, wherein a color of an ith frame of interface image is adjusted based on a color parameter of an ith array, 1≤i≤N, and i is a positive integer.

2. The method according to claim 1, further comprising:
when the electronic device is in the first display scene, displaying interface images in the first display scene based on a three-dimensional lookup table 3D LUT parameter corresponding to the first display scene; and
the performing, based on the obtained first to Nth arrays, color adjustment on N interface images to be displayed in the second display scene comprises:
performing, based on the 3D LUT parameter and the obtained first to Nth arrays, color adjustment on the N interface images to be displayed in the second display scene, wherein the color of the ith frame of interface image is adjusted based on the 3D LUT parameter and the color parameter of the ith array.

3. The method according to claim 2, further comprising:
displaying an interface image after an Nth frame of interface image in the second display scene based on a color parameter of the obtained Nth array and the 3D LUT parameter.

4. The method according to claim 2 or 3, further comprising:
detecting that the electronic device is switched from the second display scene back to the first display scene; and
performing, based on the 3D LUT parameter and the obtained first to Nth arrays in reverse order, color adjustment on N interface images to be displayed in the first display scene, wherein a color of an (N-j+1)th frame of interface image is adjusted based on the 3D LUT parameter and a color parameter of a jth array, 1≤j≤N, and j is a positive integer.

5. The method according to any one of claims 1 to 4, further comprising:
detecting that the electronic device is switched from the second display scene to a third display scene;
obtaining first to Mth arrays corresponding to the third display scene, wherein each array comprises at least one color parameter, and any one of the at least one color parameter increases or decreases one by one in the first to Mth arrays; and
performing, based on the obtained first to Mth arrays, color adjustment on M interface images to be displayed in the third display scene, wherein a color of an mth frame of interface image is adjusted based on a color parameter of an mth array, 1≤m≤M, and m is a positive integer.

6. The method according to any one of claims 1 to 5, wherein the color parameter of each array comprises hue, saturation, and value, and at least one of the hue, the saturation, and the value changes frame by frame in a plurality of arrays corresponding to one display scene.

7. The method according to claim 6, wherein any one of the hue, the saturation, and the value increases or decreases one by one based on a linear or nonlinear relationship in a plurality of arrays corresponding to one display scene, and different items in the hue, the saturation, and the value have a same change or different changes in a plurality of arrays corresponding to one display scene.

8. A color switching apparatus, applied to an electronic device, and comprising:
a detection module, configured to detect that the electronic device is switched from a first display scene to a second display scene;
an obtaining module, configured to obtain first to Nth arrays corresponding to the second display scene, wherein each array comprises at least one color parameter, and any one of the at least one color parameter increases or decreases one by one in the first to Nth arrays; and
an adjustment module, configured to perform, based on the obtained first to Nth arrays, color adjustment on N interface images to be displayed in the second display scene, wherein a color of an ith frame of interface image is adjusted based on a color parameter of an ith array, 1≤i≤N, and i is a positive integer.

9. The apparatus according to claim 8, further comprising:
a display module, configured to: when the electronic device is in the first display scene, display interface images in the first display scene based on a three-dimensional lookup table 3D LUT parameter corresponding to the first display scene, wherein
the adjustment module is specifically configured to perform, based on the 3D LUT parameter and the obtained first to Nth arrays, color adjustment on the N interface images to be displayed in the second display scene, wherein the color of the ith frame of interface image is adjusted based on the 3D LUT parameter and the color parameter of the ith array.

10. The apparatus according to claim 9, wherein
the display module is further configured to display an interface image after an Nth frame of interface image in the second display scene based on a color parameter of the obtained Nth array and the 3D LUT parameter.

11. The apparatus according to claim 9 or 10, wherein
the detection module is further configured to detect that the electronic device is switched from the second display scene back to the first display scene; and
the adjustment module is further configured to perform, based on the 3D LUT parameter and the obtained first to Nth arrays in reverse order, color adjustment on N interface images to be displayed in the first display scene, wherein a color of an (N-j+1)th frame of interface image is adjusted based on the 3D LUT parameter and a color parameter of a jth array, 1≤j≤N, and j is a positive integer.

12. The apparatus according to any one of claims 8 to 11, wherein
the detection module is further configured to detect that the electronic device is switched from the second display scene to a third display scene;
the obtaining module is further configured to obtain first to Mth arrays corresponding to the third display scene, wherein each array comprises at least one color parameter, and any one of the at least one color parameter increases or decreases one by one in the first to Mth arrays; and
the adjustment module is further configured to perform, based on the obtained first to Mth arrays, color adjustment on M interface images to be displayed in the third display scene, wherein a color of an mth frame of interface image is adjusted based on a color parameter of an mth array, 1≤m≤M, and m is a positive integer.

13. The apparatus according to any one of claims 8 to 12, wherein the color parameter of each array comprises hue, saturation, and value, and at least one of the hue, the saturation, and the value changes frame by frame in a plurality of arrays corresponding to one display scene.

14. The apparatus according to claim 13, wherein any one of the hue, the saturation, and the value increases or decreases one by one based on a linear or nonlinear relationship in a plurality of arrays corresponding to one display scene, and different items in the hue, the saturation, and the value have a same change or different changes in a plurality of arrays corresponding to one display scene.

15. A readable medium, wherein the readable medium stores instructions, and when the instructions are executed on an electronic device, the electronic device is enabled to perform the color switching method according to any one of claims 1 to 7.

16. An electronic device, comprising: a storage, configured to store instructions to be executed by one or more processors of the electronic device, and a processor, being one of the processors of the electronic device and configured to perform the color switching method according to any one of claims 1 to 7.

17. A color switching method, applied to an electronic device, and comprising:
when the electronic device is in a first display scene, displaying interface images in the first display scene based on a three-dimensional lookup table 3D LUT parameter corresponding to the first display scene; and
detecting that the electronic device is switched from the first display scene to a second display scene;
obtaining first to Nth arrays corresponding to the second display scene, wherein each array comprises at least one color parameter, and any one of the at least one color parameter increases or decreases one by one in the first to Nth arrays; and
performing, based on the obtained first to Nth arrays, color adjustment on N interface images to be displayed in the second display scene, wherein a color of an ith frame of interface image is adjusted based on a color parameter of an ith array, 1≤i≤N, and i is a positive integer.

18. The method according to claim 17, wherein the performing, based on the obtained first to Nth arrays, color adjustment on N interface images to be displayed in the second display scene comprises:
performing, based on the 3D LUT parameter and the obtained first to Nth arrays, color adjustment on the N interface images to be displayed in the second display scene, wherein the color of the ith frame of interface image is adjusted based on the 3D LUT parameter and the color parameter of the ith array.

19. The method according to claim 18, further comprising:
displaying an interface image after an Nth frame of interface image in the second display scene based on a color parameter of the obtained Nth array and the 3D LUT parameter.

20. The method according to claim 18 or 19, further comprising:
detecting that the electronic device is switched from the second display scene back to the first display scene; and
performing, based on the 3D LUT parameter and the obtained first to Nth arrays in reverse order, color adjustment on N interface images to be displayed in the first display scene, wherein a color of an (N-j+1)th frame of interface image is adjusted based on the 3D LUT parameter and a color parameter of a jth array, 1≤j≤N, and j is a positive integer.

21. The method according to any one of claims 17 to 19, further comprising:
detecting that the electronic device is switched from the second display scene to a third display scene;
obtaining first to Mth arrays corresponding to the third display scene, wherein each array comprises at least one color parameter, and any one of the at least one color parameter increases or decreases one by one in the first to Mth arrays; and
performing, based on the obtained first to Mth arrays, color adjustment on M interface images to be displayed in the third display scene, wherein a color of an mth frame of interface image is adjusted based on a color parameter of an mth array, 1≤m≤M, and m is a positive integer.

22. The method according to claim 20, further comprising:
detecting that the electronic device is switched from the second display scene to a third display scene;
obtaining first to Mth arrays corresponding to the third display scene, wherein each array comprises at least one color parameter, and any one of the at least one color parameter increases or decreases one by one in the first to Mth arrays; and
performing, based on the obtained first to Mth arrays, color adjustment on M interface images to be displayed in the third display scene, wherein a color of an mth frame of interface image is adjusted based on a color parameter of an mth array, 1≤m≤M, and m is a positive integer.

23. The method according to any one of claims 17 to 19, wherein the color parameter of each array comprises hue, saturation, and value, and at least one of the hue, the saturation, and the value changes frame by frame in a plurality of arrays corresponding to one display scene.

24. The method according to claim 20, wherein the color parameter of each array comprises hue, saturation, and value, and at least one of the hue, the saturation, and the value changes frame by frame in a plurality of arrays corresponding to one display scene.

25. The method according to claim 21, wherein the color parameter of each array comprises hue, saturation, and value, and at least one of the hue, the saturation, and the value changes frame by frame in a plurality of arrays corresponding to one display scene.

26. The method according to claim 23, wherein any one of the hue, the saturation, and the value increases or decreases one by one based on a linear or nonlinear relationship in a plurality of arrays corresponding to one display scene, and different items in the hue, the saturation, and the value have a same change or different changes in a plurality of arrays corresponding to one display scene.
